# EUROPÄISCHE PATENTSCHRIFT

(11) **EP 1 474 300 B1**
(45) Veröffentlichungstag und Bekanntmachung des Hinweises auf die Patenterteilung: **11.04.2012**
(21) Anmeldenummer: 03739460.8
(22) Anmeldetag: 08.02.2003
(51) Int. Cl.: B60G 9/00, B60G 11/28, B60G 11/113

(54) **FAHRZEUGACHSE**
VEHICLE AXIS
ESSIEU DE VEHICULE

(30) Priorität: 14.02.2002 DE 10206017
(43) Veröffentlichungstag der Anmeldung: 10.11.2004
(73) Patentinhaber: BPW Bergische Achsen Kommanditgesellschaft, 51674 Wiehl (DE)
(72) Erfinder: MICHELS, Manfred, D-51067 Köln (DE)
(74) Vertreter: Christophersen, Ulrich Rudolf
(86) Internationale Anmeldenummer: PCT/EP2003/001261
(87) Internationale Veröffentlichungsnummer: WO 2003/068540

(56) Entgegenhaltungen:
- WO-A-01/42678
- US-A- 3 730 550
- US-A- 3 844 579
- US-A- 6 123 349

## Beschreibung

Die Erfindung betrifft eine Fahrzeugachse mit den im Oberbegriff des Anspruchs 1 angegebenen Merkmalen.

Aus der US 3,730,550 ist eine Fahrzeugachse bekannt, bei der mehrfach geschichtete Federpakete als Längslenker dienen, die in Fahrtrichtung sowohl vorne wie auch hinten über Konsolen an dem Fahrzeugrahmen angelenkt sind. Ungefähr mittig unter den Federpaketen ist das Achsrohr der Fahrzeugachse angeordnet, wobei die Verbindung von Federpaketen und Achsrohr in deren Kreuzungsbereich durch bügelförmig gestaltete Zugstangen erreicht wird. Diese umgreifen mit ihrem bügelartigen Ende den Achskörper, wohingegen die freien Enden der Zugstangen an einer Platte befestigt sind, die sich von oben auf dem Federpaket des Längslenkers abstützt. Auf diese Platte wiederum ist unter Ausnutzung der mit einem Gewinde versehenen freien Enden der Zugstangen eine Konsole aufgesetzt, die in ihrer Mitte eine nach oben vorstehende, ebene Auflagefläche bildet. Auf dieser Auflagefläche der Konsole ist die Luftfeder montiert, wobei sich die Luftfeder in an sich bekannter Weise aus ihrer Grundplatte, einem Deckel sowie einem dazwischen angeordneten Rollbalg zusammensetzt.

Nachteilig bei der Achskonstruktion nach der US 3,730,550 ist deren konstruktionsbedingt und ungeachtet der für die einzelnen Komponenten verwendeten Werkstoffe hohes Gewicht. Dies führt zum einen zu einem erhöhten Gesamtgewicht des mit der Achskonstruktion ausgerüsteten Fahrzeugs und vor allem der ungefederten Massen, was wiederum Einfluß auf das Fahrverhalten des so ausgerüsteten Fahrzeugs haben kann.

Grundsätzlich geht das Bestreben im Fahrzeugbau dahin, zur Gewichtsreduzierung herkömmliche Werkstoffe wie z.B. Stahl durch Leichtbauwerkstoffe wie z.B. Leichtmetall oder Kunststoff zu ersetzen. Daneben wird auch angestrebt, auch bei Einsatz herkömmlicher Werkstoffe und damit allein aufgrund konstruktiver Änderungen zu insgesamt leichteren Achskonstruktionen zu gelangen.

Aus der EP 0 554 573 A ist eine Fahrzeugachse in weit verbreiteter Bauart bekannt, bei der die Luftfeder nicht direkt oberhalb der Achse angeordnet ist, sondern am hinteren Ende des jeweiligen Längslenkers. Der Luftfederbalg ist als Rollbalg gestaltet und achsseitig mit einem Tauchkolben versehen, zwischen dem und einem fahrzeugseitigen Deckel sich der Rollbalg erstreckt. Der Tauchkolben ist nach unten mit einer Öffnung versehen, in der eine auf dem Längslenker angeordnete Platte zentriert ist, die als Grundplatte für den Tauchkolben dient.

Eine Fahrzeugachse mit den Merkmalen des Oberbegriffs von Anspruch 1 ist aus der US 3,844,579 bekannt. Als Längslenker dienen mehrere Blattfedern, die im Bereich der Anbindung der Achse geschichtet sind. Diese Anbindung befindet sich am hinteren Ende des vorne gelenkig mit dem Fahrzeug verbundenen Längslenkers. Die Verbindung des Achskörpers mit dem Längslenker erfolgt durch Verschrauben einer sich oberhalb des Achskörpers quer zu diesem erstreckenden Platte mittels U-förmiger Spannelemente. Die Platte ist hierzu im Bereich des einen kreisförmigen Querschnitt aufweisenden Achskörpers zu einem Sattel verformt, der sich nach Art einer Brücke über den Achskörper erstreckt. Als Verdrehsicherung für die Fahrzeugachse dienen beidseitig des Achskörpers daran angeformte zusätzliche Vorsprünge, auf denen sich die Platte unmittelbar abstützt. Alternativ ist es auch möglich, die Unterseite der Platte mit dem Achskörper zu verschweißen. In diesem Fall sind die an der Achse angeformten zusätzlichen Vorsprünge nicht erforderlich.

Die Oberseite der Platte dient zur Befestigung eines Federelementes, dessen anderes, oberes Ende am Fahrzeugrahmen befestigt ist.

Nachteilig bei dieser Achskonstruktion ist, dass die gegen den Achskörper abgestützte Platte mit dem Achskörper nur über einen sehr kleinen Teil Ihrer Unterseite in Kontakt steht und nur diese Flächenanteile zur Kraftübertragung zwischen Fahrzeugrad einerseits und dem Fahrzeugrahmen andererseits beitragen.

Vor diesem Hintergrund liegt der Erfindung die **Aufgabe** zugrunde, eine Fahrzeugachse zu schaffen, die sich bei geringer Bauhöhe der Verbindung des Achskörpers mit dem Längslenker durch eine verbesserte Verbindung dieser Komponenten auszeichnet, und wenig Bauteile benötigt.

Zur **Lösung** dieser Aufgabe wird eine Fahrzeugachse der eingangs genannten Art mit den im kennzeichnenden Teil des Anspruchs 1 angegebenen Merkmalen vorgeschlagen.

Zur Verbesserung der Verbindung zwischen dem Achskörper und der Grundplatte der Luftfeder ist die Form der Unterseite der Grundplatte an die Querschnittsgestalt des Achskörpers angepaßt, etwa durch an der Grundplatte ausgebildete, an die Querschnittsgestalt des Achskörpers angepasste Abrundungen.

Da die Luftfeder darüber hinaus einen Tauchkolben aufweist, zwischen dem und dem fahrzeugseitigen Deckel sich der Rollbalg erstreckt, und der Tauchkolben an seiner Unterseite eine Öffnung aufweist, in der die Grundplatte zentriert ist, bildet die Grundplatte gemeinsam mit dem Tauchkolben den unteren, unmittelbar auf dem Achskörper aufliegenden Abschluß der Luftfeder. Auch insoweit ist die Achsanbindung verbessert, da eine zusätzliche Platte zwischen Luftfeder und Achskörper nicht erforderlich ist, wodurch sich die erforderliche Bauteilzahl und somit auch das Gewicht der Achsanbindung reduziert.

Mit einer bevorzugten Ausgestaltung wird vorgeschlagen, daß sich die Zugelemente von oben her auf der Grundplatte der Luftfeder abstützen. Hierzu können die Zugelemente z. B. als Gewindestangen oder Schraubenbolzen gestaltet sein, wobei sich diese mit einem Schraubenkopf oder einer Mutter auf der Oberseite der Grundplatte abstützen.

Gemäß einer Ausführungsform der Fahrzeugachse wird vorgeschlagen, dass die Grundfläche der Grundplatte kleiner als die Grundfläche des Tauchkolbens ist, dass die Grundplatte von unten in die Öffnung des Tauchkolbens eingesetzt ist, und dass die Grundplatte nur mit einem Teil ihrer Gesamthöhe in die Öffnung hineinragt. Diese Ausführungsform ermöglicht eine besonders günstige Ableitung der hohen Druckkräfte infolge des Fahrzeuggewichtes bei vollständig entlüfteter Luftfeder. Diese Druckkräfte werden nicht über die Mantelfläche des Tauchkolbens auf die Achse bzw. den Längslenker abgeführt, sondern z. B. über einen zentralen, hoch belastbaren Kern, der sich von oben auf der Grundplatte abstützt. Hierbei ist die Grundplatte mit einer Grundfläche versehen, die geringer als die Grundfläche des Tauchkolbens selbst ist. Da außerdem die Grundplatte nur mit einem Teil ihrer Gesamthöhe in die Öffnung des Tauchkolbens hineinragt, werden über die Mantelfläche des Tauchkolbens keine nennenswerten Druckkräfte abgeführt. Die Mantelfläche des Tauchkolbens kann auf diese Weise relativ dünnwandig ausgebildet sein.

Mit einer weiteren Ausführungsform wird vorgeschlagen, daß die Luftfeder zweiteilbar ist, wobei ihre Grundplatte über einen daran angeformten Kegel in der Öffnung des Tauchkolbens zentrierbar ist. Diese Ausgestaltung hat Vorteile bei Fahrzeugen, die für eine Kran- oder Bahnverladung geeignet sein sollen. Bei einer solchen Verladung wird der Rollbalg durch das Gewicht der Fahrzeugachse vollständig ausgerollt, was im Rollbalg zu einem unerwünschten Unterdruck führen kann. Außerdem besteht die Gefahr, daß der Rollbalg beim anschließenden Wiederabsetzen des Fahrzeuges nicht wieder ordnungsgemäß außen über den Tauchkolben abrollt, sondern er nach innen eingefaltet und hierbei beschädigt wird. Wenn hingegen die Luftfeder in der Weise zweiteilbar ist, daß ihre Grundplatte wegen eines an ihr angeformten Kegels ein Zentrierelement ist, welches in der Öffnung des Tauchkolbens zentrierbar ist, können Tauchkolben und Kegel sich für eine Kran- und Bahnverladung des Fahrzeuges auseinander bewegen, wodurch das Gewicht der heraushängenden Fahrzeugachse nicht mehr am Tauchkolben zieht und den Rollbalg streckt.

Schließlich ist eine weitere Ausgestaltung der Fahrzeugachse dadurch gekennzeichnet, daß die Zugelemente Zugstangen sind, die sich zur Übertragung der Zugkräfte einerseits an der Grundplatte und andererseits im Kreuzungsbereich von Achskörper und jeweiligem Längslenker von unten an einem Achslappen abstützen.

Anhand von Ausführungsbeispielen, die auf den Zeichnungen dargestellt sind, werden nachfolgend Einzelheiten und weitere Vorteile der Erfindung erläutert. Auf den Zeichnungen zeigen:
- Figur 1: eine unter dem Rahmen eines Fahrzeuges angeordnete Luftfederachse in normalem Fahrbetrieb;
- Figur 2: eine Einzelheit der Luftfederachse, wobei die zweigeteilt und trennbar gestaltete Luftfeder in getrenntem Zustand dargestellt ist;
- Figur 3: eine gegenüber Figur 2 alternative Ausführungsform mit einteiliger Luftfeder;
- Figur 4: eine weitere Ausführungsform mit ebenfalls einteiliger Luftfeder; und
- Figur 5: eine weitere Ausführungsform mit ebenfalls einteiliger Luftfeder.

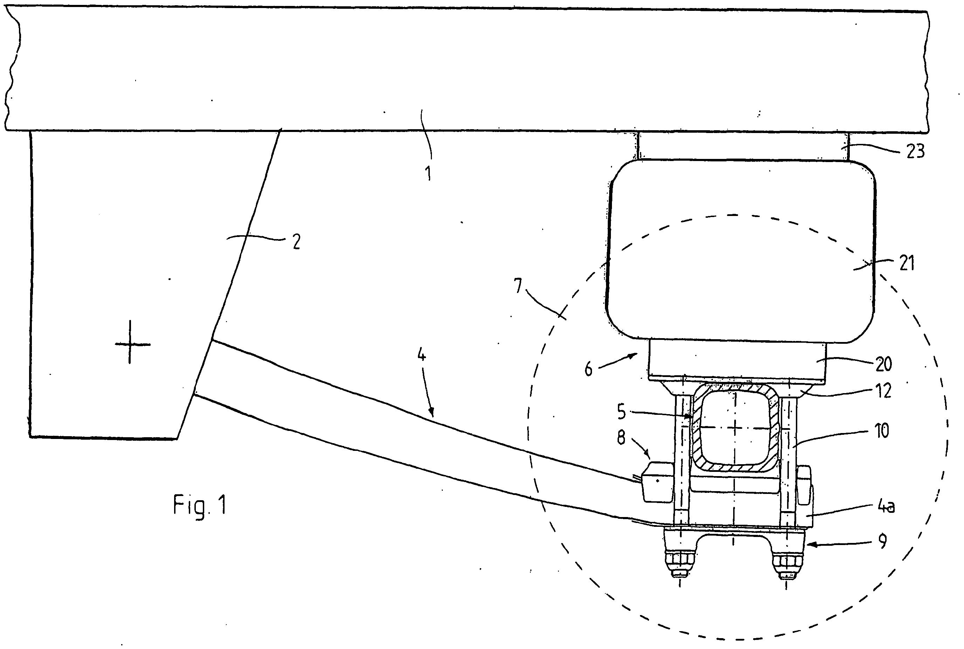

Bei der in Figur 1 in Gesamtdarstellung wiedergegebenen Luftfederachse für ein gezogenes Fahrzeug, insbesondere einen LKW-Anhänger sind unter einem Fahrzeugrahmen 1 Konsolen 2 befestigt, an denen aus Federstahl bestehende Längslenker 4 für einen durchgehenden Achskörper 5 schwenkbar gelagert sind. Zwischen dem Fahrzeugrahmen 1 und dem rückwärtigen Ende der beidseits der Fahrzeugmittelachse angeordneten Längslenker 4 sind Luftfedern 6 angeordnet. Der beim Ausführungsbeispiel einen im wesentlichen quadratischen Querschnitt aufweisende Achskörper 5, an dem die Räder 7 des Fahrzeuges gelagert sind, ist quer zu den Längslenkern 4 über den Längslenkern angeordnet und stützt sich hierzu unter Zwischenlage eines Achslappens 8 auf den Oberseiten der freien Enden der Längslenker 4 ab. Zwischen jeder Konsole 2 und dem Achskörper 5 kann außerdem auf jeder Seite des Fahrzeuges ein Stoßdämpfer angeordnet sein.

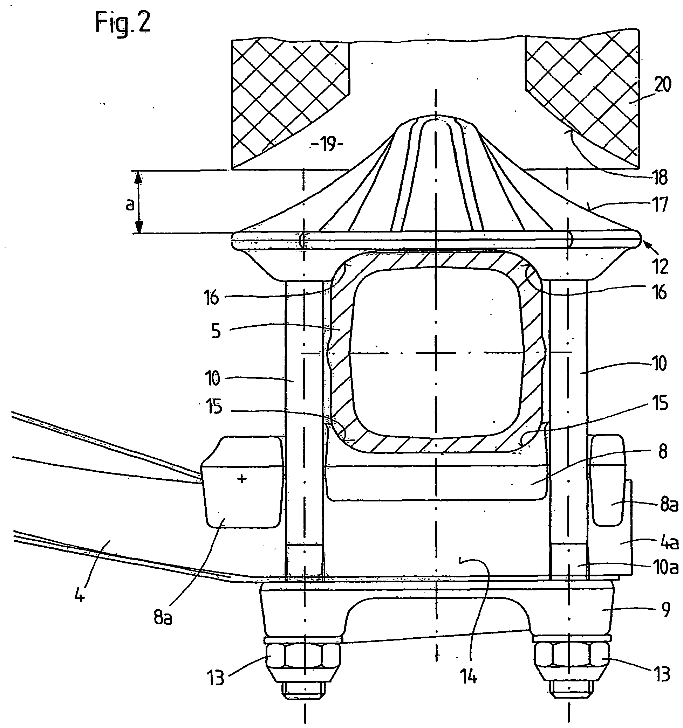

Die Figur 2 zeigt anhand einer ersten Ausführungsform Einzelheiten der Luftfeder 6 sowie der Achseinbindung, d. h. der Verbindung zwischen den beideseits der Fahrzeugmittelachse angeordneten Längslenkern 4 und dem gemeinsamen, durchgehend gestalteten Achskörper 5. Zu dieser Achseinbindung gehört der bereits erwähnte Achslappen 8, ferner ein weiterer, von unten gegen den jeweiligen Längslenker 4 anliegender Achslappen 9, ferner die Luftfeder 6 bzw. Teile davon, und schließlich als Zugelemente dienende Zugstangen 10.

Die Luftfeder 6 benötigt wenig Bauhöhe, da sie sich unmittelbar auf dem Achskörper 5 abstützt. Bestandteil der Luftfeder 6 ist u. a. deren Grundplatte 12, welche den unteren Abschluß der Luftfeder bildet und welche unmittelbar auf dem Achskörper 5 sitzt. Die Zugstangen 10 sind an dieser Grundplatte 12 verankert und erstrecken sich quer sowohl zu dem Achskörper 5 wie auch dem jeweiligen Längslenker 4 und durchdringen hierbei sowohl den oberen Achslappen 8 wie auch den unteren Achslappen 9. Im Bereich des unteren Achslappens 9 sind die Zugstangen 10 mit einem Außengewinde 10a versehen. Auf das Außengewinde 10a sind Muttern 13 aufgeschraubt, die nach ihrem Anziehen eine von unten nach oben gerichtete Kraft auf den unteren Achslappen 9 ausüben. Die Zugstangen 10 verspannen auf diese Weise den Achslappen 9 gegenüber der Grundplatte 12 der Luftfeder und binden auf dieser Weise auch die dazwischen angeordneten Konstruktionsteile unter Druck ein, nämlich in der Reihenfolge von unten nach oben den Längslenker 4, den Achslappen 8 sowie den Achskörper 5.

Figur 2 läßt ferner erkennen, daß der Achslappen 8 mit Seitenwänden 8a versehen ist, die sich entlang der Seitenflächen 14 des Längslenkers 4 erstrecken. Auf diese Weise kann der Achslappen 8 nicht quer zu dem Längslenker 4 verrutschen. Die Form der Oberseite des Achslappens 8 ist mittels entsprechender Abrundungen 15 an die Querschnittsgestalt des Achskörpers 5 angepaßt.

Auch die Unterseite der Grundplatte 12 ist über entsprechende Abrundungen 16 an die Querschnittsgestalt des Achskörpers 5 angepaßt, so daß die Grundplatte 12 unter Einsparung von Bauhöhe unmittelbar auf der Oberseite des Achskörpers 5 aufliegt. Die beschriebene Luftfeder läßt sich daher mit geringer Bauhöhe realisieren.

Einstückiger Bestandteil der Grundplatte 12 nach Fig. 2 ist ein nach oben ragender Kegel 17. Der Kegel 17 ist vorzugsweise aus einzelnen Stegen zusammengesetzt, die insgesamt die Außenkontur eines Kegels bzw. eines kegelähnlichen Gebildes wie z. B. einer nach oben verjüngenden Kalotte aufspannen. Die so gebildete Kontur paßt exakt in eine Gegenkontur 18 in einer Öffnung 19 eines Tauchkolbens 20 der Luftfeder. Aus Gründen der Übersicht sind Grundplatte 12 und Tauchkolben 20 in Figur 2 in getrenntem Zustand mit dem Abstand a eingezeichnet.

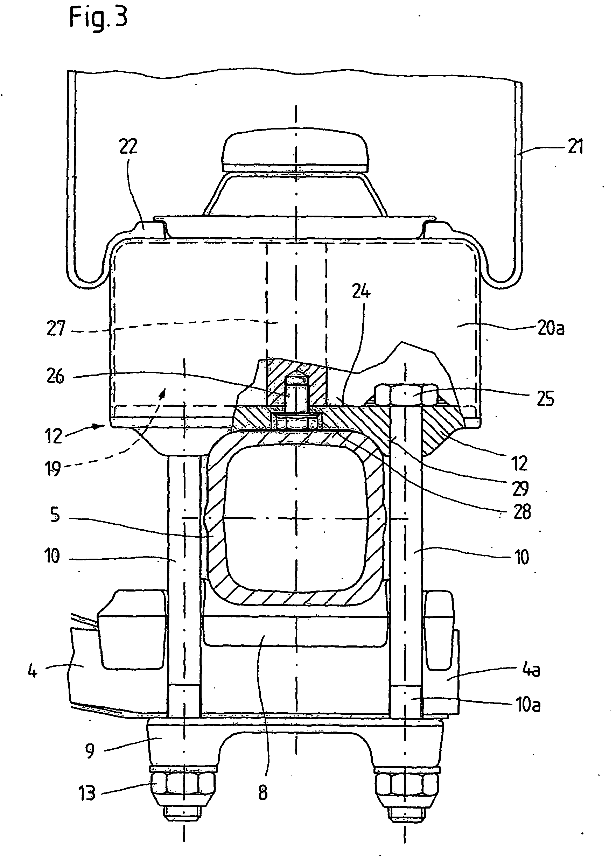

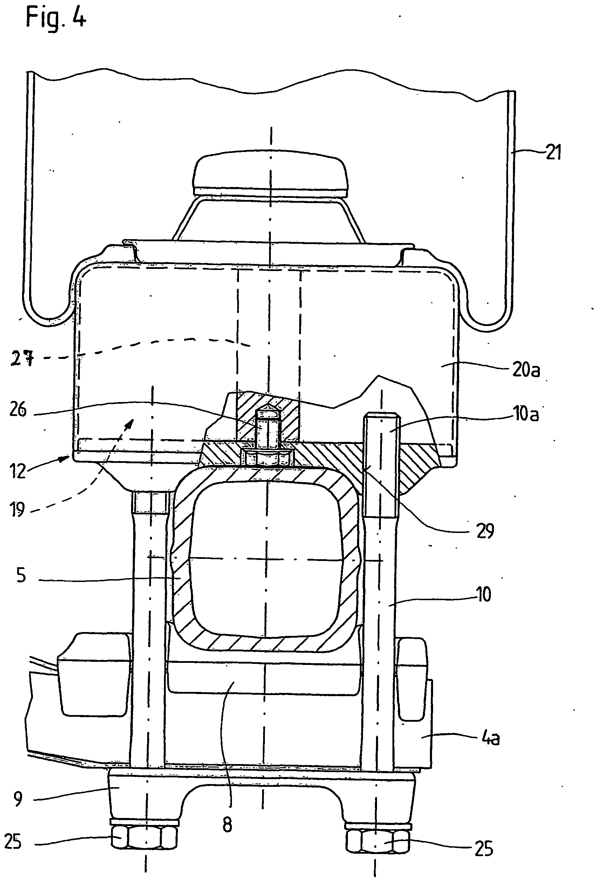

Figur 2 läßt nicht im einzelnen erkennen, wie der walkfähige Rollbalg der Luftfeder an dem Tauchkolben 20 befestigt ist. Diese Befestigung entspricht allerdings der Befestigung gemäß den Ausführungsbeispielen Figur 3 und Figur 4. Der Rollbalg 21 ist daher mit seinem unteren wulstartigen Ende 22 auf der Oberseite des Tauchkolbens (bei den Ausführungsbeispielen nach Figur 3 und Figur 4 ist dies der Tauchkolben 20a) festgelegt.

Demgegenüber ist das obere Ende des Rollbalgs 21, wie dies Figur 1 erkennen läßt, an einem Deckel 23 befestigt, der zugleich die obere Abschlußplatte der Luftfeder 6 bildet. Dieser Deckel 23 ist über eine Verschraubung fest mit der Unterseite des Fahrzeugrahmens 1 verbunden.

Im Betrieb kann sich der Rollbalg 21, was insbesondere die Figuren 3 und 4 erkennen lassen, an der äußeren zylindrischen Mantelfläche des Tauchkolbens 20, 20a abrollen.

Die zweigeteilte und damit trennbare Luftfeder gemäß Figur 2 bietet große Vorteile im Falle einer Kran- oder Bahnverladung des mit der Luftfederachse ausgerüsteten Fahrzeugs. Wird nämlich das Fahrzeug für eine Kran- oder Bahnverladung angehoben, so kann sich die Achse nach unten bewegen, ohne ihr Gewicht auf den Rollbalg 21 zu übertragen. Dies ist darauf zurückzuführen, daß sich der Kegel 17 aus der Öffnung 19 des Tauchkolbens 20 herausbewegen kann und daher der Tauchkolben in der entlüfteten Position hängenbleibt. Auf diese Weise ist der untere, durch die Grundplatte 12 gebildete Teil der Luftfeder von dem oberen u. a. durch den Rollbalg 21 gebildeten Teil der Luftfeder getrennt. Beim Absetzen des Fahrzeuges tritt der Kegel 17 der Grundplatte 12 wieder bündig in Öffnung 19 unten im Tauchkolben 20 ein und wird darin zentriert. Die Grundplatte 12 mit dem Kegel ist also ein Zentrierelement, welches den Tauchkolben 20 zentriert.

Bei der Ausführungsform nach Figur 3 ist die Luftfeder nicht trennbar. Zu diesem Zweck ist die Grundplatte 12, auf deren Oberseite 24 sich ein Schraubenkopf 25 der Zugstange 10 abstützt, mit dem Tauchkolben 20a verschraubt. Hierzu greift eine mittig in dem Tauchkolben 20a angeordnete Schraube 26 von unten in eine Distanzhülse 27, welche Distanzhülse 27 starr im Inneren und auf der Mittelachse des Tauchkolbens 20a befestigt ist. Der Kopf der Schraube 26 befindet sich hierbei in einer zentralen Einsenkung an der Unterseite 28 der Grundplatte 12.

Figur 3 läßt ferner erkennen, daß jede Zugstange 10, von der bei jeder Achseinbindung vorzugsweise vier Stück vorhanden sind, eine Bohrung 29 der Grundplatte 12 durchdringt. Auf diese Weise sind alle Zugstangen 10 in ihrer Lage exakt festgelegt. Die Schraubenköpfe 25 sind, damit sie sich nicht drehen können, mit der Oberseite 24 der Grundplatte 12 verschweißt oder formschlüssig gegen Verdrehen gesichert.

Das Ausführungsbeispiel gemäß Figur 4 unterscheidet sich von dem Ausführungsbeispiel gemäß Figur 3 lediglich dadurch, daß als Zugstange 10 eine lange Schraube dient, die nicht von oben her, sondern von unten her durch die Achseinbindung geführt ist. Hierbei liegt der Schraubenkopf 25 von unten gegen den Achslappen 9 an. Die vier Bohrungen 29 der Grundplatte 12 sind in diesem Fall jeweils mit einem Innengewinde versehen, in welches das Außengewinde 10a der Zugstange eingreift. Wiederum zentriert die Grundplatte 12, die hierzu mit einer umlaufenden Stufe versehen ist, den Tauchkolben 20.

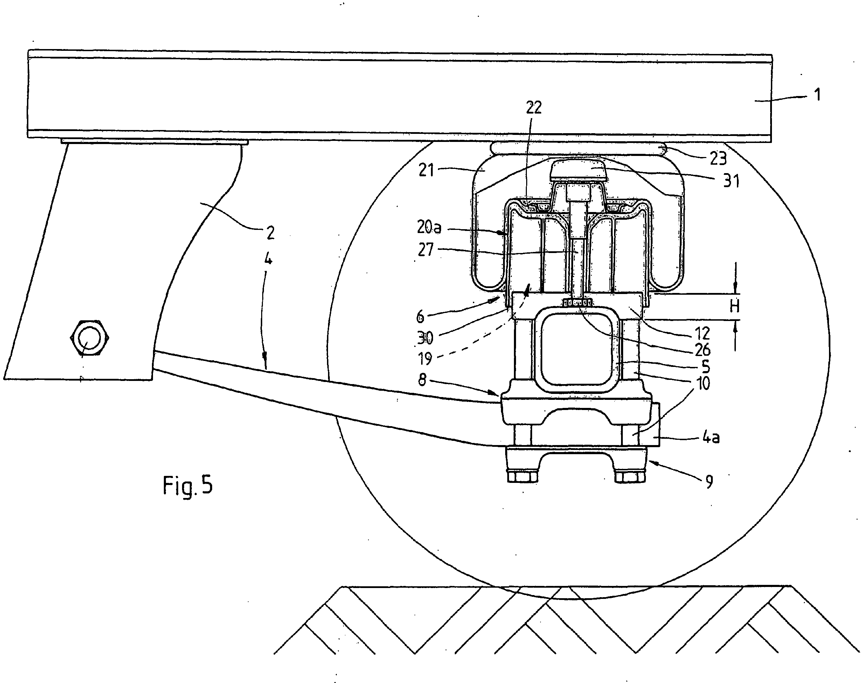

Die in Figur 5 dargestellte Ausführungsform ist den Ausführungsformen nach den Figuren 3 und 4 ähnlich, jedoch ist die Grundplatte 12 hinsichtlich ihrer Grundfläche verkleinert ausgebildet. Insbesondere ist die Grundfläche der Grundplatte 12 geringer, als die Grundfläche des Tauchkolbens 20a. Auf diese Weise läßt sich die Grundplatte 12 von unten in den stark verrippten Tauchkolben 20a einsetzen, wobei die Grundplatte 12 nur mit einem Teil ihrer Gesamthöhe H in die Öffnung 19 des Tauchkolbens 20a hineinragt. Mit einem Teil ihrer Gesamthöhe H ragt die Grundplatte 12 daher nach unten über die Unterkante 30 des Tauchkolbenmantels hinaus. Die Öffnung 19 an der Unterseite des Tauchkolbens weist einen durch die Verrippung vorgegebenen Querschnitt auf, in den die Grundplatte 12 formschlüssig hineinpaßt. Durch diesen Formschluß ist die Grundplatte 12 im Bodenbereich des Tauchkolbens formschlüssig zentriert bzw. zentriert die Grundplatte 12 den darüber gesetzten Tauchkolben.

Auf der Oberseite der Grundplatte 12 stützt sich die Distanzhülse 27 ab, an deren oberem Ende wiederum ein Puffer 31 der Luftfeder befestigt ist. Im Zustand der vollständig entlüfteten Luftfeder 6, welcher Zustand in Figur 5 auch dargestellt ist, kann sich daher das Fahrzeuggewicht über den Puffer 31, die Distanzhülse 27 und die stabil ausgeführte Grundplatte 12 unmittelbar auf dem Achskörper 5 abstützen. Über die Mantelfläche des Tauchkolbens 20a hingegen werden keine nennenswerten Druckkräfte abgeführt, diese Mantelfläche kann daher relativ dünnwandig ausgebildet sein.

### Bezugszeichenliste

- 1: Fahrzeugrahmen
- 2: Konsole
- 4: Längslenker
- 4a: freies Ende des Längslenkers
- 5: Achskörper
- 6: Luftfeder
- 7: Rad
- 8: Achslappen
- 8a: Seitenwand
- 9: Achslappen
- 10: Zugstange 10a Gewinde
- 11: Anlenkung des Längslenkers
- 12: Grundplatte 13 Mutter
- 14: Seitenwand
- 15: Abrundung
- 16: Abrundung
- 17: Kegel
- 18: Gegenkontur 19 Öffnung
- 20: Tauchkolben 20a Tauchkolben
- 21: Luftfederbalg
- 22: wulstartiges Ende
- 23: Deckel
- 24: Oberseite
- 25: Schraubenkopf
- 26: Schraube
- 27: Distanzhülse
- 28: Unterseite
- 29: Bohrung
- 30: Unterkante
- 31: Puffer

- a: Abstand
- H: Höhe der Grundplatte

## Patentansprüche

1. Fahrzeugachse mit
- einem gegenüber dem Fahrzeugrahmen (1) federnd abgestützten Achskörper (5),
- mindestens einem den Achskörper (5) kreuzenden Längslenker (4), welcher ausschließlich im Bereich seines vorderen Endes an dem Fahrzeugrahmen angelenkt ist,
- einer über dem Kreuzungsbereich von Achskörper und Längslenker angeordneten Luftfeder (6) mit einer Grundplatte (12), die mit ihrer Unterseite auf dem Achskörper (5) aufliegt, einem Deckel (23), und einem dazwischen angeordneten Luftfederbalg (21),
- quer sowohl zu dem Längslenker wie auch zu dem Achskörper verlaufenden, diese Teile gegeneinander ziehenden Zugelementen (10), die sich an der Grundplatte (12) abstützen,
**dadurch gekennzeichnet,**
- **daß** die Luftfeder (6) einen Tauchkolben (20, 20a) aufweist, zwischen dem und dem fahrzeugseitigen Deckel (23) sich der Rollbalg (21) erstreckt,
- **daß** der Tauchkolben (20, 20a) an seiner Unterseite eine Öffnung (19) aufweist, in der die Grundplatte (12) zentriert ist,
- und **daß** die Form der Unterseite der Grundplatte (12) an die Querschnittsgestalt des Achskörpers (5) angepaßt ist.

2. Fahrzeugachse nach Anspruch 1, **dadurch gekennzeichnet, daß** sich die Zugelemente (10) von oben her auf der Grundplatte (12) der Luftfeder (6) abstützen.

3. Fahrzeugachse nach Anspruch 1 oder Anspruch 2, **dadurch gekennzeichnet, dass** die Grundfläche der Grundplatte (12) kleiner als die Grundfläche des Tauchkolbens (20a) ist, dass die Grundplatte (12) von unten in die Öffnung (19) des Tauchkolbens (20a) eingesetzt ist, und dass die Grundplatte (12) nur mit einem Teil ihrer Gesamthöhe (H) in die Öffnung (19) hineinragt.

4. Fahrzeugachse nach Anspruch 1, **dadurch gekennzeichnet, daß** die Luftfeder (6) zweiteilbar ist, wobei ihre Grundplatte (12) über einen daran angeformten Kegel (17) in der Öffnung (19) des Tauchkolbens (20a) zentriert ist.

5. Fahrzeugachse nach Anspruch 1, **dadurch gekennzeichnet, daß** die Grundplatte (12) über eine daran angeformte Stufe in der Öffnung (19) des Tauchkolbens (20a) zentriert ist.

6. Fahrzeugachse nach Anspruch 5, **dadurch gekennzeichnet, daß** die Grundplatte (12) mit dem Tauchkolben (20a) verschraubt ist.

7. Fahrzeugachse nach Anspruch 6, **dadurch gekennzeichnet, daß** sich die Verschraubung (26) auf der Mittelachse des Tauchkolbens (20a) befindet.

8. Fahrzeugachse nach einem der vorangehenden Ansprüche, **dadurch gekennzeichnet, daß** die Zugelemente Zugstangen (10) sind, die sich zur Übertragung der Zugkräfte einerseits an der Grundplatte (12), und andererseits im Kreuzungsbereich von Achskörper (5) und jeweiligem Längslenker (4) von unten an einem Achslappen (9) abstützen.

## Claims

1. A vehicle axis with
- an axle casing (5) supported in a sprung manner with respect to the vehicle frame (1),
- at least one trailing arm (4) which crosses the axle casing (5) and which is articulated to the vehicle frame exclusively in the region of its front end,
- an air spring (6) situated above the crossing region of the axle casing and the trailing arm and having a base plate (12) which rests with its underside on the axle casing (5), a cover (23) and an air spring bellows (21) arranged between them,
- draw elements (10) which extend transversely both with respect to the trailing arm and with respect to the axle casing and draw these parts towards each other and which are supported on the base plate (12),
**characterized in that**
- the air spring (6) has a plunger (20, 20a) between which and the cover (23) towards the vehicle the rolling bellows (21) extends,
- on its underside the plunger (20, 20a) has an opening (19) in which the base plate (12) is centred,
- and the shape of the underside of the base plate (12) is adapted to the cross-sectional form of the axle casing (5).

2. A vehicle axis according to Claim 1, **characterized in that** the draw elements (10) are supported from above on the base plate (12) of the air spring (6).

3. A vehicle axis according to Claim 1 or Claim 2, **characterized in that** the base surface of the base plate (12) is smaller than the base surface of the plunger (20a), the base plate (12) is inserted from below into the opening (19) in the plunger (20a), and the base plate (12) projects with only part of its overall height (**H**) into the opening (19).

4. A vehicle axis according to Claim 1, **characterized in that** the air spring (6) is capable of being divided into two, wherein the base plate (12) thereof is centred by way of a tapered portion (17) integrally formed thereon in the opening (19) in the plunger (20a).

5. A vehicle axis according to Claim 1, **characterized in that** the base plate (12) is centred by way of a step integrally formed thereon in the opening (19) in the plunger (20a).

6. A vehicle axis according to Claim 5, **characterized in that** the base plate (12) is screwed to the plunger (20a).

7. A vehicle axis according to Claim 6, **characterized in that** the screw fastening (26) is situated on the centre axis of the plunger (20a).

8. A vehicle axis according to any one of the preceding Claims, **characterized in that** the draw elements are tie rods (10) which in order to transmit the tensile forces are supported at one end on the base plate (12) and at the other end from below on a spring seat (9) in the crossing region of the axle casing (5) and the respective trailing arm (4).

## Revendications

1. Essieu de véhicule comprenant
- un corps d'essieu (5) soutenu de façon pneumatique par rapport au châssis du véhicule (1),
- au moins un bras oscillant longitudinal (4) croisant le corps d'essieu (5), lequel est articulé uniquement dans la zone de son extrémité avant sur le châssis du véhicule,
- un coussin d'air (6) disposé au-dessus de la zone de croisement du corps d'essieu et du bras oscillant longitudinal avec une plaque de base (12), qui repose par son côté inférieur sur le corps d'essieu (5), un couvercle (23), et un soufflet à coussin d'air (21) intercalé,
- des éléments de traction (10) agencés transversalement aussi bien par rapport au bras oscillant longitudinal qu'au corps d'essieu, tirant ces parties les unes par rapport aux autres, lesquelles s'appuient sur la plaque de base (12),
**caractérisé**
- **en ce que** le coussin d'air (6) présente un piston plongeur (20, 20a), entre lequel et le couvercle (23) côté véhicule s'étend le soufflet à roulement (21),
- **en ce que** le piston plongeur (20, 20a) présente sur son côté inférieur une ouverture (19) dans laquelle la plaque de base (12) est centrée,
- et **en ce que** la forme du côté inférieur de la plaque d'assise (12) est adaptée à la forme de section du corps d'essieu (5).

2. Essieu de véhicule selon la revendication 1, **caractérisé en ce que** les éléments de traction (10) s'appuient à partir du haut sur la plaque de base (12) du coussin d'air (6).

3. Essieu de véhicule selon la revendication 1 ou la revendication 2, **caractérisé en ce que** la surface de base de la plaque de base (12) est inférieure à la surface de base du piston plongeur (20a), **en ce que** la plaque de base (12) est insérée par le bas dans d'ouverture (19) du piston plongeur (20a) et **en ce que** la plaque de base (12) dépasse seulement par une partie de sa hauteur totale (H) dans l'ouverture (19).

4. Essieu de véhicule selon la revendication 1, **caractérisé en ce que** le coussin d'air (6) peut être divisé en deux, sa plaque de base (12) étant centrée, par un cône (17) formé dessus, dans l'ouverture (19) du piston plongeur (20a).

5. Essieu de véhicule selon la revendication 1, **caractérisé en ce que** la plaque de base (12) est centrée au moyen d'un niveau formé dessus dans l'ouverture (19) du piston plongeur (20a).

6. Essieu de véhicule selon la revendication 5, **caractérisé en ce que** la plaque de base (12) est vissée avec le piston plongeur (20a).

7. Essieu de véhicule selon la revendication 6, **caractérisé en ce que** l'assemblage vissé (26) se trouve sur l'axe médian du piston plongeur (20a).

8. Essieu de véhicule selon l'une des revendications précédentes, **caractérisé en ce que** les éléments de traction sont des barres de traction (10), qui s'appuient pour la transmission des forces de traction d'une part sur la plaque de base (12), et d'autre part dans la zone de croisement du corps d'essieu (5) et du bras oscillant longitudinal (4) respectif par en bas sur une patte d'essieu (9).
